# EUROPÄISCHE PATENTANMELDUNG

(11) **EP 2 778 036 A1**
(43) Veröffentlichungstag der Anmeldung: **17.09.2014**
(21) Anmeldenummer: 14159258.4
(22) Anmeldetag: 12.03.2014
(51) Int. Cl.: B62M 6/45, B62K 23/04

(54) **Fahrradgriff-System**

(30) Priorität: 15.03.2013 DE 202013002492 U
(71) Anmelder: RTI Sports Vertrieb von Sportartikeln GmbH, 56070 Koblenz (DE)
(72) Erfinder: Krause, Andreas, 56068 Koblenz (DE); Müller, Michael, 56427 Siershahn (DE)
(74) Vertreter: Von Kreisler Selting Werner - Partnerschaft von Patentanwälten und Rechtsanwälten mbB

(57) **Zusammenfassung**

Ein Fahrradgriff-System weist neben einem Griffelement (10) an einem Lenker (16) befestigbares Bedienelement (18, 24) zum Bedienen eines elektrischen Unterstützungsmotors auf. Das Bedienelement (18, 24) weist ein auf einem Lagerelement (24) drehbares Betätigungselement (18) auf. Durch Drehen des Betätigungselements (18) aus einer Ruheposition in insbesondere zwei unterschiedliche Aktivierungspositionen kann ein Erhöhen oder ein Erniedrigen der Unterstützung durch den Unterstützungsmotor erfolgen. Um ein einfaches intuitives Betätigen des Betätigungselements (18) zu ermöglichen ist ein Rückstellelement (50) vorgesehen, durch das das Betätigungselement (18) aus der ersten gegebenenfalls der zweiten Aktivierungsposition selbststätig in eine Ruheposition zurückgedreht wird.

## Beschreibung

Die Erfindung betrifft ein Fahrradgriff-System zur Befestigung an einem Fahrradlenker.

Bei Fahrrädern mit einem elektrischen Hilfsmotor sind am Lenker Bedienelemente zum Steuern des Elektromotors angeordnet. Diese Bedienelemente sind beispielsweise klemmend am Lenker befestigt. Da es sich um Bedienelemente handelt, die unabhängig von dem Griff sind, können diese seitlich neben einem herkömmlichen Fahrradgriff an dem Lenker befestigt werden. Derartige Bedienelemente weisen den Nachteil auf, dass zur Bedienung häufig die Hand vom Fahrradgriff gelöst werden muss. Zumindest ein teilweises Lösen ist erforderlich, um beispielsweise mit dem Daumen einen Schalter an dem Bedienelement zu betätigen. Hierdurch ist die Sicherheit verringert, da beispielsweise beim Überfahren einer Bodenwelle oder dergleichen die Gefahr besteht, dass die Hand vom Lenker abrutscht. Auch ist die Ergonomie derartiger Bedienelemente nicht oder nur geringfügig auf die Handhaltung des Benutzers während des Fahrradfahrens abgestimmt. Bei derartigen Bedienelementen erfolgt das Steuern des Motors durch Schalter wobei vorzugsweise bspw. durch Drücken eines Schalters die Unterstützung durch den Motor erhöht und durch den anderen Schalter verringert werden kann. Dies hat den Nachteil, dass eine intuitive Steuerung durch den Benutzer nicht möglich ist, sondern der Blick auf das Bedienelement gerichtet werden muss, um den richtigen Schalter zu betätigen.

Aufgabe der Erfindung ist es, ein Fahrradgriff-System zu schaffen, bei dem das Bedienelement einfach betätigbar ist.

Die Lösung der Aufgabe erfolgt erfindungsgemäß durch die Merkmale des Anspruchs 1.

Das erfindungsgemäße Fahrradgriff-System weist ein Griffelement auf, das an bzw. auf einem Fahrradlenker befestigbar ist. Insbesondere seitlich neben dem gegebenenfalls etwas kürzer als herkömmliche Griffe ausgebildete Griffelement ist erfindungsgemäß ein Bedienelement zum Bedienen eines elektrischen Unterstützungsmotors des Fahrrads angeordnet. Das Bedienelement ist in montiertem Zustand vorzugsweise innerhalb des Griffelements angeordnet, so dass vorzugsweise, ohne die Hand von dem Griffelement lösen zu müssen, ein Betätigen des Bedienelements insbesondere mit dem Daumen möglich ist. Durch das Bedienelement ist ein Verändern der Unterstützungsleistung des Unterstützungsmotors möglich. Erfindungsgemäß weist das Bedienelement ein Betätigungselement auf. Das Betätigungselement ist mit einem Lagerelement drehbar verbunden. Bspw. kann das Lagerelement hülsenförmig ausgebildet sein bzw. einen hülsenförmigen Ansatz aufweisen und auf dem Fahrradlenker mittelbar oder unmittelbar fixiert sein. Das Betätigungselement ist sodann auf dem Lagerelement drehbar. Durch ein Verdrehen des Betätigungselements auf oder in dem Lagerelement, d. h. durch ein Verdrehen des Betätigungselements relativ zu dem Lagerelement erfolgt ein Betätigen eines elektrischen Schaltelements.

Zum Betätigen des Unterstützungsmotors kann das Betätigungselement aus einer Ruheposition in mindestens eine Aktivierungsposition gedreht werden. Erfindungsgemäß ist ein Rückstellelement vorgesehen, um das Betätigungselement aus der mindestens einen Aktivierungsposition in die Ruheposition insbesondere selbsttätig beziehungsweise automatisch zurückzudrehen. Dies hat den Vorteil, dass ein intuitives Bedienen des Betätigungselements möglich ist, da sobald der Benutzer insbesondere den Daumen oder einen anderen Finger, mit dem er das Betätigungselement betätigt hat, von diesem entfernt das Betätigungselement automatisch wieder in seine Ruheposition zurückgedreht wird. Zu einem erneuten Betätigen befindet sich das Betätigungselement somit wieder in der Ruheposition und kann vom Benutzer intuitiv insbesondere ohne den Blick zu dem Betätigungselement wenden zu müssen, betätigt werden.

In bevorzugter Ausführungsform weist das Rückstellelement ein Federelement wie einen elastischen Körper, eine Spiralfeder oder dergleichen auf. Das Federelement ist vorzugsweise zwischen dem Betätigungselement und dem Lagerelement oder zwischen dem Betätigungselement und einem am Lenker befestigten Fixierelement angeordnet. Beim Drehen des Betätigungselements aus der Ruheposition erfolgt somit ein Verformen des Federelements. Hierdurch wird eine Rückstellkraft erzeugt, so dass beim Loslassen des Betätigungselements dieses automatisch wieder in die Ruheposition zurückgedreht wird.

Bei einer besonders bevorzugten Ausführungsform der Erfindung ist es möglich das Betätigungselement aus einer Ruheposition in eine erste und eine zweite Aktivierungsposition zu drehen. Die beiden Aktivierungspositionen befinden sich ausgehend von der Ruheposition vorzugsweise in entgegengesetzter Drehrichtung. So kann bei einem Drehen des Betätigungselements nach oben bspw. ein Erhöhen der Unterstützungsleistung des Unterstützungsmotors beim Drehen des Betätigungselements nach unten ein Verringern der Unterstützungsleistung bewirkt werden. Das Zurückstellen aus der ersten sowie auch der zweiten Aktivierungsposition in die Ruheposition kann mit Hilfe eines Federelements erfolgen, das je nach Drehrichtung des Betätigungselements zusammengedrückt oder auseinandergezogen wird. Bevorzugt ist das Vorsehen von zwei Federelementen, die jeweils eine Rückstellkraft bewirken. Dies hat ferner den Vorteil, dass das Betätigungselement in einer Ruheposition von den beiden Federelementen auf einfache Weise gehalten wird. Das eine oder die beiden Federelemente sind vorzugsweise derart angeordnet, dass sie im Wesentlichen in Umfangsrichtung des Betätigungselements und/oder des Lagerelements verlaufen. Insbesondere verläuft das eine oder die beiden Federelemente in Umfangrichtung des Lenkers.

Bei einer besonders bevorzugten Weiterbildung der Erfindung ist ferner ein Halteelement vorgesehen, das das Betätigungselement in der Ruheposition hält. Durch das Halteelement erfolgt ein definiertes Halten des Betätigungselements in der Ruheposition. Durch das Halteelement ist die Lage des Betätigungselements in der Ruheposition eindeutig definiert, so dass ein intuitives Betätigen des Betätigungselements insbesondere mit dem Daumen auf einfache Weise möglich ist. Das Halteelement ist hierbei in besonderes bevorzugter Ausführungsform zusätzlich zu zwei in gegensätzlicher Richtung wirkenden Federelementen vorgesehen, so dass das Betätigungselement durch die Federelemente nach dem Loslassen durch den Benutzer automatisch in die Ruheposition zurückgedreht und in dieser gehalten wird.

Das Halteelement weist vorzugsweise einen Haltepin oder Haltestift auf, der in der Ruheposition in eine Haltemulde oder eine Halteausnehmung eingreift. Beispielsweise kann der Haltepin ein sphärisches oder halbkugelförmiges Ende aufweisen, das in eine komplementäre ebenfalls sphärische oder halbkugelförmige Ausnehmung beziehungsweise Haltemulde eingreift. Hierbei kann der Radius der Haltemulde größer gewählt sein als derjenige des Haltepins, so dass eine Art Hineingleiten des Haltepins in die Haltemulde erfolgt, sobald sich das Betätigungselement nahe der Ruheposition befindet. Das Halteelement ermöglicht somit ein exaktes Positionieren in der Ruheposition. Der Haltepin kann elastisch ausgebildet sein, oder federbelastet sein. Die Federbelastung, die durch einen elastischen Körper oder eine Feder erfolgt, erfolgt vorzugsweise in Richtung der Haltemulde. Der Haltepin ist vorzugsweise am Lagerelement oder an dem am Lenker angeordneten Fixierelement vorgesehen. Bei dieser Anordnung ist die Haltemulde am Betätigungselement vorgesehen. Die Anordnung von Haltepin und Haltemulde, ist auch umgekehrt möglich.

In einer besonders bevorzugten Weiterbildung der Erfindung weist das Bedienelement ein Gleitelement auf, das drehbar auf dem Lagerelement angeordnet ist. Das Gleitelement bildet zusammen mit dem Lagerelement in dieser Ausführungsform ein Gleitlager. Alternativ können zwischen diesen beiden Elementen auch Wälzkörper wie Kugeln angeordnet sein. Besonders bevorzugt ist, dass das Lagerelement einen zylindrischen Innendurchmesser aufweist, der im Wesentlichen dem Außendurchmesser des Fahrradlenkers entspricht, so dass das Lagerelement auf einfache Weise auf dem Fahrradlenker beispielsweise mit Hilfe eines Klemmmittels wie einer Schelle oder dergleichen fixiert werden kann. Das Fixieren des Lagerelements kann auch durch Verbindung mit dem Griffelement, das sodann auf dem Fahrradlenker fixiert ist, erfolgen. Eine bevorzugte Ausführungsform der die Gleitfläche bildende Außenseite des Lagerelements ist vorzugsweise ebenfalls im Wesentlichen zylindrisch ausgebildet. Entsprechend ist es auch bevorzugt, dass das Gleitelement eine im Wesentlichen zylindrische in Richtung des Lagerelements weisende Innenseite aufweist. Bevorzugt ist es hierbei, dass das Gleitelement einstückig mit dem Bedienelement ausgebildet, insbesondere als Spritzgussteil ausgeführt ist.

Um eine möglichst einfache Betätigung des Bedienelements insbesondere ein einfaches Verdrehen des Bedienelements auf dem Lagerelement zu ermöglichen weist das Bedienelement eine Schaltmulde auf. Diese ist in montiertem Zustand insbesondere in Richtung des Benutzers ausgerichtet, so dass ohne die Hand von dem Fahrradgriff zu lösen ein Betätigen des Bedienelements mit dem Daumen über die entsprechende Schaltmulde auf einfache möglich ist. Anstatt einer Schaltmulde kann bspw. auch ein Schaltansatz, der insbesondere in die Richtung des Benutzers weist und insbesondere mit dem Daumen betätigbar ist, vorgesehen sein.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht eines Fahrradgriffs zusammen mit einem Bedienelement,
- Fig. 2: eine schematische Draufsicht des Lagerelements,
- Fig. 3: eine schematische Seitenansicht des Lagerelements in Richtung des Pfeils III in Fig. 2 und
- Fig. 4: eine schematische Schnittansicht des Bedienelements sowie des Lagerelements entlang der Linie IV - IV in Fig. 1.

Bei einer bevorzugten Ausführungsform des erfindungsgemäßen Fahrradgriff-Systems ist ein Griffelement 10 vorgesehen. Das Griffelement 10 weist einen Ansatz 12 zum Aufstützen des Handtellers auf und ist über ein Klemmmittel 14 am Fahrradlenker befestigt. Ein derartiges Griffelement ist beispielsweise in EP 1 537 014 beschrieben. Die Fixierung des Griffelements an einem Lenker 16 erfolgt über das Klemmmittel 14. Auf einer bezogen auf das Griffelement 10 inneren Seite ist ein Betätigungselement 18 angeordnet. Das Betätigungselement 18 ist zumindest teilweise um den Lenker 16 herum verschwenk- bzw. verdrehbar. Hierdurch erfolgt ein Schalten eines elektrischen Schalters zur Steuerung eines über ein Kabel 20 mit dem Bedienelement verbundenen Unterstützungsmotors. Die Verbindung kann auch drahtlos erfolgen. Das Drehen des Betätigungselements 18 erfolgt in dem dargestellten Ausführungsbeispiel mit Hilfe eines in eine Schaltmulde 22 des Betätigungselements eingelegten Daumens und Bewegen des Daumens nach oben oder unten.

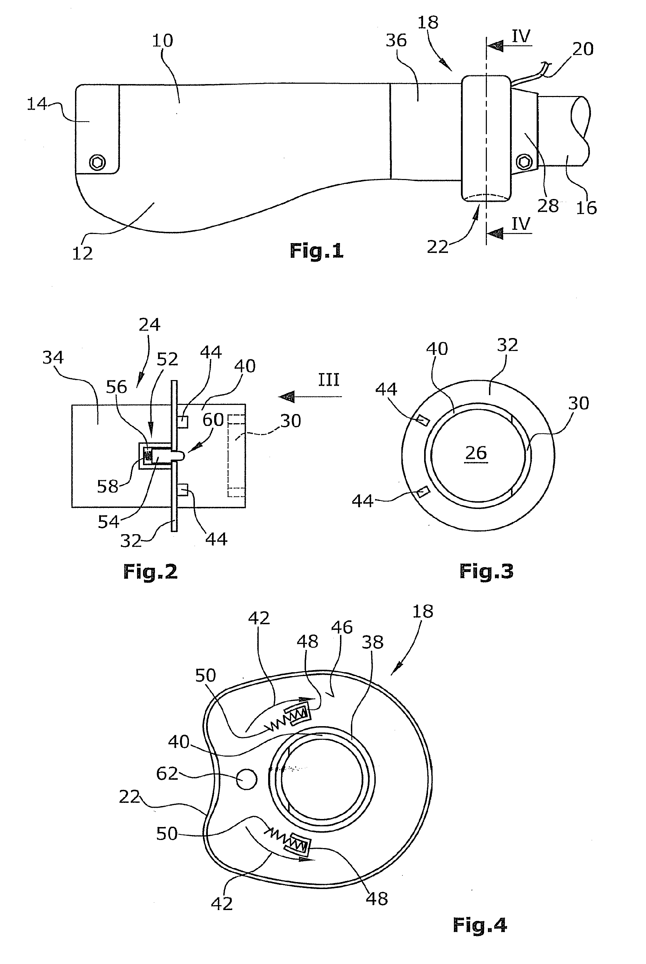

Das Betätigungselement 18 ist auf einem Lagerelement 24 (Fig. 2) angeordnet. Das Lagerelement 24 weist eine den Außendurchmesser des Lenkers 16 aufweisende zylindrische Öffnung 26 (Fig. 3) auf. Mit Hilfe eines als Klemme ausgebildeten Fixierelements 28 (Fig. 1) in Zusammenwirkung mit einer Ausnehmung 30 in dem Lagerelement kann ein klemmendes Fixieren des Lagerelements 24 auf dem Lenker 16 erfolgen. Auf einer in Fig. 2 rechten bzw. inneren Seite eines kreisringförmigen Anlagerings 32 ist das Betätigungselement 18 angeordnet. Ein gegenüberliegender zylindrischer Teil 34 des Lagerelements 24 ragt entweder unmittelbar in das Griffelement 10 oder ist teilweise von einem weiteren im Wesentlichen zylindrischen Griffteil 36 umgeben, so dass der zylindrische Ansatz 34 nur teilweise in das Griffelement 10 ragt. In dem zylindrischen Griffteil 36 können bspw. weitere Elektronikbauteile oder dgl. untergebracht sein.

Das Betätigungselement 18 weist im dargestellten Ausführungsbeispiel einen inneren zylindrischen, ein Gleitelement ausbildenden Ansatz 38 auf. Dieser umgibt den zylindrischen Ansatz 40 des Lagerelements 10, so dass ein Verdrehen bzw. Verschwenken des Bedienelements 18 auf dem zylindrischen Ansatz 40 des Lagerelements 24 entsprechend der Pfeile 42 möglich ist. Das Betätigen des Betätigungselements 18 erfolgt im dargestellten Ausführungsbeispiel mit Hilfe des Daumens, der in die Mulde 22 gelegt wird.

An dem Anlagering 32 des Lagerelements 24 sind zwei Ansätze 44 angeordnet. An einer in Richtung des ringförmigen Elements 32 weisenden Seitenfläche 46 des Betätigungselements 18 sind zwei im Querschnitt U-förmige Ansätze 48 angeordnet. In diesen sind die beiden in diesem Beispiel das Rückstellelement auszubildenden Federelemente 50 angeordnet. Die in Fig. 4 freien Enden der Federelemente 50 liegen an den Ansätzen 44 an. Auf den in Fig. 4 dargestellten Ruhepositionen des Betätigungselements kann dieses mit dem Daumen nach oben in Richtung des Uhrzeigersinns bewegt werden. Hierdurch erfolgt durch ein nicht näher dargestelltes Schaltelement ein Schalten des Unterstützungsmotors ein Erhöhen der Unterstützungsleistung. Bei dem Drehen des Bedienelements 48 im Uhrzeigersinn erfolgt ein Komprimieren des in Fig. 4 oberen Federelements 50. Sobald der Daumen nunmehr wieder aus der Schaltmulde entfernt wird, erfolgt automatisch ein Dekomprimieren der oberen Feder 50 und somit ein Zurückdrehen des Betätigungselements aus dieser bspw. ersten Aktivierungsposition zurück in die in Fig. 4 dargestellte Ruheposition. Entsprechend erfolgt beim Drehen des Betätigungselements gegen den Uhrzeigersinn ein Komprimieren des in Fig. 4 unteren Federelements 50, wobei beim Zurückziehen des Daumens wiederum ein Dekomprimieren dieses Federelements erfolgt, so dass das Betätigungselement 18 aus dieser zweiten Aktivierungsposition ebenfalls wieder automatisch in die in Fig. 4 dargestellte Ruheposition zurückgedreht wird.

Um ein sicheres Verweilen des Betätigungselements 18 in der Ruhposition zu gewährleisten ist in bevorzugter Ausführungsform zusätzlich ein Halteelement 52 (Fig. 2) vorgesehen. Das Halteelement weist im dargestellten Ausführungsbeispiel einen Haltepin 54 auf. Der Haltepin 54 ist in Fig. 2 nach links in eine Gehäusetasche 56 drückbar. Hier erfolgt ein Komprimieren eines Federelements 58. Durch das Federelement 58 ist der Haltepin federbelasted. In der Ruheposition ist der Kopf 60 des Haltepins 54 in einer Haltemulde 62 (Fig. 4) des Betätigungselements angeordnet.

## Patentansprüche

1. Fahrradgriff-System, mit
einem neben einem Griffelement (10) an einem Fahrradlenker (16) befestigbaren Bedienelement (18, 24) zum Bedienen eines elektrischen Unterstützungsmotors,
**dadurch gekennzeichnet, dass**
das Bedienelement ein auf einem Lagerelement (24) drehbares Betätigungselement (18) aufweist, das aus einer Ruheposition in mindestens eine Aktivierungsposition drehbar ist und
ein Rückstellelement (50) zum Zurückdrehen des Betätigungselements aus der mindestens einen Aktivierungsposition in die Ruheposition vorgesehen ist.

2. Fahrradgriff-System nach Anspruch 1, **dadurch gekennzeichnet, dass** das Rückstellelement ein Federelement (50) aufweist, das vorzugsweise zwischen dem Betätigungselement (18) und dem Lagerelement (24) oder dem Betätigungselement (18) und einem am Fahrradlenker (16) befestigten Fixierelement (28) angeordnet ist.

3. Fahrradgriff-System nach Anspruch 1 oder 2, **dadurch gekennzeichnet, dass** das Betätigungselement (18) aus der Ruheposition in eine erste und eine zweite Aktivierungsposition vorzugsweise in entgegengesetzte Richtung drehbar ist.

4. Fahrradgriff-System nach Anspruch 3, **dadurch gekennzeichnet, dass** das Rückstellelement zwei Federelemente (50) aufweist, wobei ein erstes Federelement (50) zum Zurückstellen aus der ersten Aktivierungsposition in die Ruheposition und ein zweites Federelement (50) zum Zurückstellen aus der zweiten Arretierungsposition in die Ruheposition vorgesehen ist.

5. Fahrradgriff-System nach einem der Ansprüche 1 bis 4, **dadurch gekennzeichnet, dass** das Rückstellelement insbesondere eines oder beide Federelemente (50) in Umfangsrichtung des Betätigungselements (18) und/oder des Lagerelements (24) angeordnet ist.

6. Fahrradgriff-System nach einem der Ansprüche 1 bis 5, **gekennzeichnet durch** ein Halteelement (52), das das Betätigungselement (18) in der Ruheposition hält.

7. Fahrradgriff-System nach Anspruch 6, **dadurch gekennzeichnet, dass** das Halteelement (52) einen Haltepin (54) aufweist, der in der Ruheposition in einer Haltemulde (62) angeordnet ist.

8. Fahrradgriff-System nach Anspruch 7, **dadurch gekennzeichnet, dass** der Haltepin (54) in Richtung der Haltemulde (62) federbelasted ist.

9. Fahrradgriff-System nach Anspruch 7 oder 8, **dadurch gekennzeichnet, dass** der Haltepin (54) am Lagerelement (24) oder am Fixierelement (28) und der Haltemulde (62) am Betätigungselement (18) angeordnet ist.
